# EUROPÄISCHE PATENTSCHRIFT

(11) **EP 0 489 888 B1**
(45) Veröffentlichungstag und Bekanntmachung des Hinweises auf die Patenterteilung: **14.09.1994**
(21) Anmeldenummer: 91912148.3
(22) Anmeldetag: 01.07.1991
(51) Int. Cl.: F16D 55/224, B60T 8/52

(54) **SCHEIBENBREMSE**
DISK BRAKE
FREIN A DISQUE

(30) Priorität: 02.07.1990 DE 9010026 U
(43) Veröffentlichungstag der Anmeldung: 17.06.1992
(73) Patentinhaber: LUCAS INDUSTRIES PUBLIC LIMITED COMPANY, Solihull, West Midlands B91 3TX (GB)
(72) Erfinder: WOLLENWEBER, Karl-Heinz, D-5405 Ochtendung (DE); ZIMMERMANN, Dieter, D-5590 Cochem (DE)
(74) Vertreter: von Hellfeld, Axel, Dr. Dipl.-Phys.
(86) Internationale Anmeldenummer: EP9101226
(87) Internationale Veröffentlichungsnummer: WO9200464

(56) Entgegenhaltungen:
- EP-A- 0 229 618
- DE-A- 2 043 278
- DE-A- 2 043 729
- GB-A- 2 176 555
- RESEARCH DISCLOSURE, No. 270, October 1986, New York, NY, USA, page 635, "Anti-skid braking with brake-mount stress sensing"
- PATENT ABSTRACTS OF JAPAN, vol. 12, no. 292 (M-729)(3139) 10 August 1988; & JP-A-63 068449

## Beschreibung

Die Erfindung betrifft eine Scheibenbremse mit zwei beidseits an die Bremsscheibe andrückbaren Bremsbacken, die in bezug auf eine bei Anlage der Bremsbacken an die Bremsscheibe erzeugte Kraft an einem fahrzeugfesten Träger abgestützt sind, und mit zumindest einem im Kraftweg der Kraft zwischen einer Bremsbacke und dem Träger angeordneten Kraftsensor zum Messen des Bremsmomentes.

Eine solche Scheibenbremse ist aus der EP 0 221 299 A2 bekannt, siehe dort insbesondere Fig. 4. Dort ist an der Trägerplatte eines Bremsbelages bei einer Schwimmsattelbremse ein Drehmomentsensor vorgesehen, der im Kraftweg der durch Bremsreibung erzeugten Reibkraft (sogenannte Umfangskraft) zwischen der Bremsscheibe und den Reibbelägen sowie dem fahrzeugfesten Träger angeordnet ist.

Daneben geht die Erfindung aus von einem Stand der Technik, wie er aus der EP 0 229 618 A2 bekannt ist. Der Offenbarungsgehalt dieser Druckschrift wird ausdrücklich mit zum Inhalt der vorliegenden Anmeldung gemacht. Die dort beschriebene Schwimmsattel-Teilbelag-Scheibenbremse für Kraftfahrzeuge hat einen Schwimmsattel, der in bezug auf einen fahrzeugfesten Träger verschiebbar gelagert ist, zwei Bremsbacken, welche die Bremsscheibe beidseits beaufschlagen und auf ihren der Bremsscheibe abgekehrten Seiten Trägerplatten für Bremsbeläge aufweisen, eine hydraulische Kolben-Zylinder-Anordnung im Schwimmsattel, die einen der zwei Bremsbacken direkt und den anderen Bremsbacken über den Schwimmsattel beaufschlagt, und eine Gleit-Führung zwischen dem Träger und dem Schwimmsattel. Sie zeichnet sich dadurch aus, daß eine der Belag-Trägerplatten ausschließlich am Schwimmsattel und die andere ausschließlich am Koblen der Kolben-Zylinder-Anordnung abgestützt ist und daß zwischen dem Kolben oder einem mit ihm fest verbundenen Bauteil und dem Träger eine weitere Gleit-Führung vorgesehen ist. Diese bekannte Scheibenbremse kennt aber keine Meßeinrichtung zum Bestimmen des Bremsmomentes.

Bei fortschrittlichen Bremsen ist eine Kenntnis des tatsächlich beim Bremsen durch Reibung erzeugten Bremsmomentes höchst wünschenswert.

Aus der US-PS 2 183 700 ist eine direkte Messung des Bremsmomentes bei einer Trommelbremse bekannt. Zur Messung wird dort ein exzentrischer Stift zwischen den Bremsbacken angeordnet und eine bei Bremsung erzeugte Reibkraft bewirkt eine Drehung des Stiftes. Die am Stift wirkende Drehkraft ist proportional zum tatsächlich erzeugten Bremsmoment, jedoch unabhängig von der mittels des Bremspedals aufgebrachten Betätigungskraft. Der genannte, sich bei Erzeugung eines Bremsmomentes drehende Stift ist mit einer Einrichtung versehen, die bei seiner Drehung einen elektrischen Stromkreis so beaufschlagt, daß ein Signal abgegeben wird, welches der Drehung und damit dem Bremsmoment proportional ist.

Diesem Stand der Technik liegt schon die Erkenntnis zugrunde, daß das tatsächlich beim Bremsen erzeugte Bremsmoment keineswegs in jedem Falle eine eindeutige Funktion des mit dem Bremspedal im Bremszylinder erzeugten Hydraulikdruckes ist. Die Ursachen für das Fehlen eines solchen eindeutigen Zusammenhanges können vielfältig sein und reichen von defekten Bremsen über abgeriebene Bremsbeläge bishin zu Änderungen des Reibungskoeffizienten zwischen der Bremsscheibe (oder der Bremstrommel) und den Bremsbacken aufgrund unterschiedlicher Temperaturen.

Eine genaue Kenntnis der tatsächlichen Größe des durch Reibung erzeugten Bremsmomentes kann vielfältigen Zwecken dienen, insbesondere kann das Bremsmoment zur Steuerung der Bremsanlage herangezogen werden, zu ihrer Überwachung, zur Ermittlung des Straßenhaftwertes, zur Steuerung der Antriebsmaschine, zum Steuern der Anfahrkuppelung (siehe die oben zitierte EP 0 221 299 A2), zum Steuern der Schaltstufen des Fahrzeuggetriebes sowie zum Zu- oder Abschalten von Antriebsachsen.

Insbesondere bedeutsam ist die direkte Messung des Bremsmomentes als zuverlässiges Mittel zum Überwachen der Funktion von Bremsen. Sämtliche bei einer Bremse meßbaren Parameter bis auf das Bremsmoment können bei einer Messung fälschlich eine funktionierende Bremse vortäuschen. Hingegen ist die Messung des Bremsmomentes der direkteste und sicherste Weg zum Überwachen der Funktion einer Bremse. Insbesondere ermöglicht auch die direkte Messung von erzeugten Bremsmomenten den Vergleich von linken und rechten Fahrzeugbremsen, wobei insbesondere die Bremsen der Hinterräder von Bedeutung sind. Ungleiche Bremsmomente auf der linken und rechten Fahrzeugseite führen zu gefährlichen Giermomenten um die Hochachse des Fahrzeuges.

Wird bei einem mit einer ABS-Anlage ausgestatteten Fahrzeug direkt das Bremsmoment an den gebremsten Rädern gemessen, so kann hieraus auch eine Aussage über den Haftbeiwert zwischen den Fahrzeugreifen und der Fahrbahn abgeleitet werden. Das Bremsmoment nämlich, das zu einem Schlupf der Reifen des Fahrzeuges führt, der eine Blockierneigung anzeigt, d.h. über einem vorgegebenen Schwellenwert liegt, ist eine Funktion des Haftbeiwertes, so daß umgekehrt aus dem gemessenen Bremsmoment der Haftbeiwert abgeleitet werden kann. Entsprechendes gilt auch für den Zusammenhang zwischen einem gegebenen Schlupf und dem Bremsmoment.

Der Erfindung liegt die Aufgabe zugrunde, eine Scheibenbremse der eingangs genannten Art so weiterzubilden, daß mit einfachen und zuverlässigen Mitteln eine Messung des Bremsmomentes ermöglicht ist.

Erfindungsgemäße Lösungen sind mit Ausgestaltungen in den Patentansprüchen gekennzeichnet.

Die erfindungsgemäß vorgesehene Anordnung des Kraftsensors in einem Führungsstift ermöglicht eine Doppelfunktion des Führungsstiftes, nämlich zum einen die Führung der bewegten Teile der Bremse in bezug auf den fahrzeugfesten Bremsträger und zum anderen die direkte Messung des Bremsmomentes.

Der erfindungsgemäße Führungsstift kann entweder am fahrzeugfesten Träger befestigt sein und in eine bewegliche Gleit-Nut zur Führung eines Bauteiles eingreifen, an dem die Gleit-Nut ausgebildet ist, oder der Führungsstift kann andererseits an dem gleitenden Bauteil (wie z.B. einem Schwimmsattel) befestigt sein und gleitend in eine Nut eingreifen, die fest mit dem fahrzeugfesten Bremsträger verbunden ist. Die Bremskraft wird dabei ausschließlich über den Führungsstift in den Bremsträger abgeleitet, d.h. es sind keine weiteren Abstützungen in einer der Bremskraftrichtung entgegengesetzten Richtung an der Bremse vorgesehen.

Die Erfindung läßt sich bevorzugt realisieren mit einer Schwimmsattel-Teilbelag-Scheibenbremse.

Bevorzugt weist der Führungsstift einen konvex abgerundeten Kopf auf, der mit bevorzugt komplementär konkav gerundeten Wandungen der Nut in Eingriff kommt. Hiermit sind auch dann genaue Messungen des Bremsmomentes möglich, wenn die Bremse bei extrem starker Belastung Biegeerscheinungen aufweist.

Als Kraftsensor sind bevorzugt Dehnungsmeßstreifen vorgesehen, die auf einer gesonderten Hülse angeordnet sind, die in den Führungsstift einbaubar ist. Bevorzugt werden solche Dehnungsmeßstreifen sowohl in Richtung der Achse des Führungsstiftes als auch senkrecht dazu angeordnet, und zwar in einer sogenannten Brückenschaltung zur Kompensation von die Messung verfälschenden Effekten. Eine solche Brückenschaltung bei Dehnungsmeßstreifen ist als solche bekannt.

Nachfolgend wird die Erfindung anhand eines Ausführungsbeispieles näher erläutert. Es zeigt:
- Fig. 1: in Draufsicht eine Schwimmsattel-Teilbelag-Scheibenbremse;
- Fig. 2: das Detail "H" von Fig. 1 in vergrößertem Maßstab;
- Fig. 3: das Detail "M" von Fig. 1 in vergrößertem Maßstab;
- Fig. 4: eine Seitenansicht der Scheibenbremse gemäß Fig. 2 (gesehen in Richtung der Drehachse der Bremsscheibe);
- Fig. 5: das Detail "U" von Fig. 4 in vergrößertem Maßstab;
- Fig. 6: das Detail "V" von Fig. 5 in vergrößertem Maßstab;
- Fig. 7: einen Axialschnitt durch einen Führungsstift mit Kraftsensor;
- Fig. 8: einen Schnitt entlang der Linie I-II von Fig. 7;
- Fig. 9: schematisch die Auftragung von Dehnungsmeßstreifen auf einer Sensorhülse und
- Fig. 10: die elektrische Verdrahtung der Dehnungsmeßstreifen in einer Brückenschaltung.

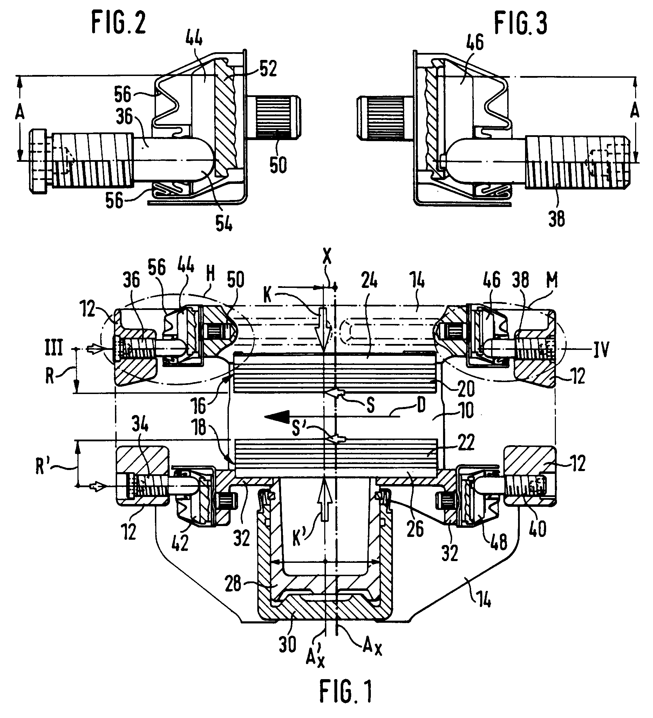

Die in den Figuren 1 bis 6 gezeigte Schwimmsattel-Teilbelag-Scheibenbremse weist eine Bremsscheibe auf, deren Lage mit dem Bezugszeichen 10 angedeutet ist und die sich bei Vorwärtsfahrt des Fahrzeuges in der Draufsicht gemäß Fig. 1 in Richtung des Pfeiles D bewegt.

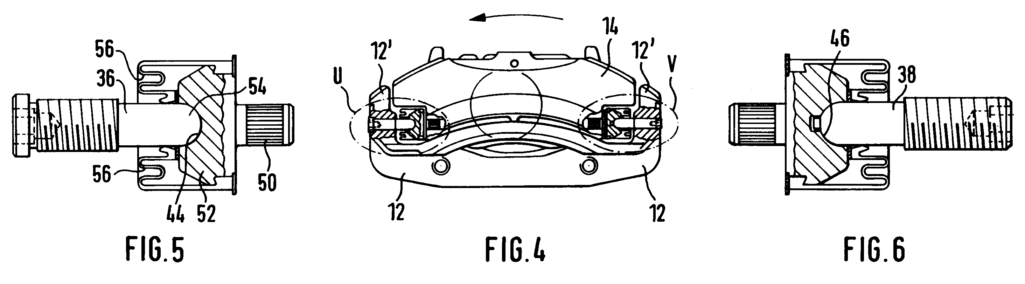

Die Bremse ist in herkömmlicher Weise an einem Bremsträger 12 abgestützt, der fahrzeugfest montiert ist, sich also nicht in bezug auf das Fahrzeug bewegt. Ein Schwimmsattel 14 übergreift die Bremsscheibe 10 (siehe auch Fig. 4).

Zwei Bremsbacken 16, 18 sind beidseits der Bremsscheibe 10 angeordnet und weisen jeweils einen Bremsbackenbelag 20 bzw. 22 auf, der zum Bremsen gegen die Bremsscheibe 10 andrückbar ist. Die Andrückung der Bremsbackenbeläge 20, 22 an die Bremsscheibe 10 erfolgt in Richtung der Pfeile K, K', welche die Klemmkraft darstellen. Die Klemmwirkung zwischen den Bremsbackenbelägen 20, 22 und der Bremsscheibe 10 erzeugt eine Reibungskraft, welche durch die Pfeile S, S' dargestellt ist.

In üblicher Weise sind die Bremsbackenbeläge 20, 22 jeweils auf Trägerplatten 24, 26 befestigt. Bei der gezeigten Schwimmsattel-Teilbelag-Scheibenbremse (die insoweit der eingangs genannten EP 0 229 618 A2 entspricht) erfolgt keine direkte Abstützung der Trägerplatten 24, 26 an entsprechenden Führungen am Bremsträger. Vielmehr erfolgt die Abstützung über weiter unten näher beschriebene Führungsstifte.

In herkömmlicher Weise weist die Schwimmsattelbremse einen Kolben 28 auf, der in einem Zylinder 30 bewegbar ist, um die Bremse bei Erzeugung eines Bremsdruckes im Zylinder 30 zu betätigen.

Mit dem Kolben 28 fest verbunden ist ein Schlitten 32.

Die beim Bremsen erzeugten Kräfte in Richtung der Pfeile S, S' werden ausschließlich über Führungsstifte, 34, 36, 39, 40 abgefangen, wobei die Führungsstifte 34, 36 die Kräfte bei Bremsung in Vorwärtsfahrtrichtung auffangen, während die Führungsstifte 38, 40 dann Kräfte in den Bremsträger 12 einleiten, wenn in Rückwärtsfahrtrichtung des Fahrzeuges gebremst wird. Da für ein übliches Kraftfahrzeug nur die Kenntnis des Bremsmomentes bei Vorwärtsfahrtrichtung von Interesse ist, sind beim dargestellten Ausführungsbeispiel nur die bei einer Abbremsung bei Vorwärtsfahrt belasteten Führungsstifte 34, 36 mit einem Kraftsensor versehen, der weiter unten näher beschrieben wird.

Die Führungsstifte 34, 36, 38, 40 greifen in Nuten 42, 44, 46 bzw. 48. Die Nuten erstrecken sich parallel zur Drehachse Ax der Bremsscheibe 10 und sind jeweils in Nutkörpern 52 ausgeformt (in Fig. 2 ist nur ein solcher Nutkörper bezüglich des Führungsstiftes 36 bezeichnet). Die Nutkörper 52 sind jeweils mit Haltestiften an den beweglichen Teilen der Bremse befestigt, die in Fig. 1 oben angeordneten Nutkörper am Schwimmsattel 14 und die in Fig. 1 unten angeordneten Nutkörper am Schlitten 32. Bei Betätigung der Bremse gleiten die Nutkörper 52 über die Führungsstifte.

In Fig. 2 ist mit "A" ein Abstand angegeben, der der Abnutzung des Bremsbackenbelages 20 entspricht.

Weiterhin ist in Fig. 1 die in bezug zur Ruhelagenhauptachse Ax um die sogenannte Achsverschiebung "X" (auch Desachsierung genannt) verschobene Kolbenachse Ax' eingezeichnet, auf der bei einer Bremsung die Bremsbacken 16, 18 der Bremse betätigt werden. Dabei wirken auf die Bremsbacken beidseits der Bremsscheibe dem Betrage nach gleich große, aber entgegengesetzt gerichtete Klemmkräfte K, K'.

Der Betrag "X" ist in Fig. 1 etwa maßstäblich gezeichnet. Die Reibkräfte sind durch die Pfeile S, S' gegeben. Der Hebelarm der Kräfte S, S' in bezug auf die Mittelachse der Führungsstifte 34, 36 ist mit R bzw. R' bezeichnet.

Die Bremse befindet sich bei einer Bremsung dann bezüglich aller in der Papierebene gemäß Fig. 1 erzeugten Drehmomente im Gleichgewicht, wenn das Produkt der Achsverschiebung "X" mit der Klemmkraft K gleich ist dem Produkt der Reibkraft S mit dem Hebelarm R. Die Achsverschiebung "X" und auch der Hebelarm R sind bei dieser Bremse Konstante.

Fig. 4 zeigt einen Schnitt gemäß der Linie III-IV der Fig. 1 und die Fig. 5 und 6 zeigen jeweils die Details U bzw. V der Fig. 4 in vergrößertem Maßstab.

Wie insbesondere Fig. 5 zu entnehmen ist, ist die Nut 44 ebenfalls abgerundet ausgebildet und paßt komplementär auf einen abgerundeten Kopf 54 des zugehörigen Führungsstiftes 36. Eine Manschette 56 deckt den Führungsstift 36 und insbesondere dessen Kopf 54 ab.

Bei einer Bremsbetätigung bewegt sich der Nutkörper 52 in Fig. 2 relativ zum Führungsstift 36 in der Papierebene, d.h. entsprechend dem Pfeil A, während in Fig. 5 eine Bremsbetätigung eine Bewegung des Nutkörpers 52 relativ zum Führungsstift 36 senkrecht zur Papierebene bedeutet.

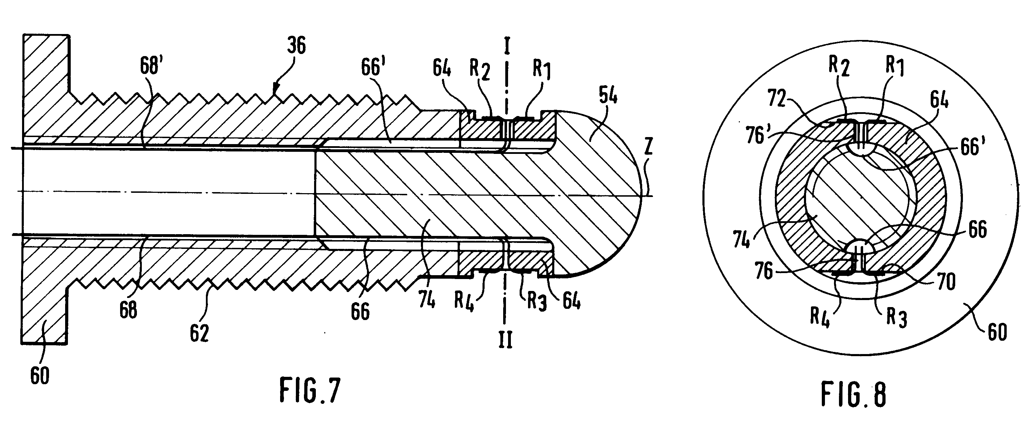

Die Fig. 7 und 8 zeigen einen Führungsstift 36 beispielhaft im Detail.

Der Führungsstift 36 weist eine Gewindehülse 62 mit einem Kopf 60 auf, der mit Schlüsselflächen versehen sein kann. Weiterhin besteht der Führungsstift aus einer Sensorhülse 64 und dem bereits oben genannten Kopfteil 54. Die Gewindehülse 62 weist ein Innengewinde auf, in das das Kopfteil 54 mit einem Bolzenabschnitt 74, der ein Außengewinde aufweist, eingeschraubt ist. Zwischen dem Kopfteil 54 und der Gewindehülse 62 ist die Sensorhülse 64 eingeklemmt. Es ist auch möglich, die Sensorhülse 64 im zusammengebauten Zustand z.B. mit dem Kopfteil 54 zu verschweißen.

Diametral gegenüberliegend sind im Außengewinde des Bolzenabschnittes 74 bzw. im Innengewinde der Gewindehülse 62 und in der Sensorhülse 64 Nuten 66 bzw. 66' (siehe auch Fig. 8) ausgebildet, durch die sich Kabel 68, 68' erstrecken. Die Kabel sind an Dehnungsmeßstreifen R₁, R₂, R₃ und R₄ angeschlossen.

Für die Montage der Dehnungsmeßstreißen sind auf der Mantelfläche der Sensorhülse 64 ebene Flächen 70, 72 ausgebildet, von denen jeweils ein Kanal 76 bzw. 76' zur Nut 66 bzw. 66' führt, so daß die Kabel an die Dehnungsmeßstreifen R₁ - R₄ angeschlossen werden können. Die Flächen 70, 72 sind poliert.

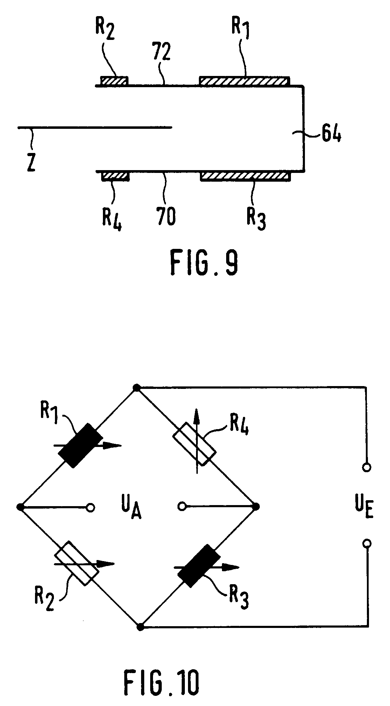

Die Anordnung der Dehnungsmeßstreifen ist schematisch in Fig. 9 dargestellt. Die Dehnungsmeßstreifen R₁, R₃ sind parallel zur Mittelachse Z des Führungsstiftes auf den ebenen Flächen 72 bzw. 70 befestigt, während die Dehnungsmeßstreifen R₂, R₄ senkrecht in bezug auf die Mittelachse Z ausgerichtet sind. Gemäß der als solches bekannten Brückenschaltung in Fig. 10 ist der Dehnungsmeßstreifen R₁ parallel zu R₃ geschaltet, während R₂ parallel zu R₄ geschaltet ist. Durch die Brückenschaltung werden Störgrößen, die insbesondere Temperaturschwankungen, Biege- und/oder Drehmomente sein können, kompensiert, so daß als Meßsignal nur die auf den Führungsstift 36 wirkende Kraft S gemessen wird. Die Umfangskräfte S, S' sind dem Bremsmoment direkt proportional.

Beim Zusammenbau des Führungsstiftes 36 (Fig. 7) wird zunächst die Sensorhülse 64 auf den Bolzenabschnitt 74 des Kopfteiles 54 aufgeschoben. Dabei werden die Kabel 68, 68', welche durch die Kanäle 76 bzw. 76' geführt sind, im Grund der Nuten 66, 66' eingebettet. Die Sensorhülse 64 kann dann z.B. mittels Laserstrahlschweißung fest mit dem Kopfteil 54 verbunden werden. Sodann wird diese Einheit über den Bolzenabschnitt 74 mit der Gewindehülse 62 verschraubt. Statt der genannten Verschweißung können die Teile auch durch Formschluß zueinander positioniert werden.

Die Manschette 56 (Fig. 2) schützt die Dehnungsmeßstreifen vor Schmutz, Feuchtigkeit etc..

Die vorstehend beschriebene Sensorhülse 64 mit den darauf angeordneten Dehnungsmeßstreifen kann auch an anderen Druckstangen eines Fahrzeuges eingesetzt werden, z.B. zur Messung der Betätigungskraft einer Bremse.

## Patentansprüche

1. Scheibenbremse mit zwei beidseits an die Bremsscheibe (10) andrückbaren Bremsbacken (16, 18), die in bezug auf eine bei Anlage der Bremsbacken (16, 18) an die Bremsscheibe (10) erzeugte Kraft (S) an einem fahrzeugfesten Träger (12) abgestützt sind, und mit zumindest einem im Kraftweg der Kraft (S) zwischen einer der Bremsbacken (16, 18) und dem Träger (12) angeordneten Kraftsensor (64, R₁, R₂, R₃, R₄) zum Messen des Bremsmomentes, dadurch **gekennzeichnet,** daß der Kraftsensor (64, R₁, R₂, R₃, R₄) an oder in einem Führungsstift (34, 36) angeordnet ist, der mit dem fahrzeugfesten Träger (12) fest verbunden ist und in eine Gleit-Nut (42, 44) eingreift, die an einem fest mit dem Bremsbacken (16, 18) verbundenen Bauteil (52) ausgeformt und in bezug auf den Führungsstift verschiebbar ist.

2. Scheibenbremse mit zwei beidseits an die Bremsscheibe (10) andrückbaren Bremsbacken (16, 18), die in bezug auf eine bei Anlage der Bremsbacken (16, 18) an die Bremsscheibe (10) erzeugte Kraft (S) an einem fahrzeugfesten Träger (12) abgestützt sind, und mit zumindest einem im Kraftweg der Kraft (S) zwischen einer der Bremsbacken (16, 18) und dem Träger (12) angeordneten Kraftsensor (64, R₁, R₂, R₃, R₄) zum Messen des Bremsmomentes, dadurch **gekennzeichnet,** daß der Kraftsensor an oder in einem Führungsstift angeordnet ist, der an einer der Bremsbacken oder einem hiermit fest verbundenen Bauteil befestigt ist und in eine Gleit-Nut verschiebbar eingreift, die an dem fahrzeugfesten Träger oder einem fest mit diesem verbundenen Bauteil ausgeformt ist.

3. Scheibenbremse nach einem der Ansprüche 1 oder 2, dadurch **gekennzeichnet,** daß die Scheibenbremse eine Schwimmsattel-Teilbelag-Scheibenbremse ist und daß der Führungsstift (34, 36) die einzige Abstützung des Bremsbackens in bezug auf die Kraft (S, S') ist.

4. Scheibenbremse nach einem der vorhergehenden Ansprüche, dadurch **gekennzeichnet,** daß der Führungsstift (34, 36) einen abgerundeten Kopf (54) aufweist, der mit den Wandungen der Nut (42, 44) in Eingriff kommt.

5. Scheibenbremse nach einem der vorhergehenden Ansprüche, dadurch **gekennzeichnet,** daß als Kraftsensor Dehnungsmeßstreifen (R₁, R₂, R₃, R₄) an dem Führungsstift angeordnet sind.

6. Scheibenbremse nach Anspruch 5,
dadurch **gekennzeichnet,** daß sowohl in Richtung der Achse (Z) des Führungsstiftes (36) als auch senkrecht dazu Dehnungsmeßstreifen angeordnet sind.

7. Scheibenbremse nach einem der vorhergehenden Ansprüche, dadurch **gekennzeichnet,** daß der Führungsstift zwei miteinander verbindbare Teile (62, 54) aufweist, zwischen denen eine Sensorhülse (64) eingeklemmt ist, welche diametral gegenüberliegende, ebene Flächen (70, 72) aufweist, auf denen Dehnungsmeßstreifen (R₁, R₂, R₃, R₄) angeordnet sind.

## Claims

1. A disc brake, comprising two brake pads (16, 18) adapted to be pressed against both sides of a brake disc (10) and supported with respect to a force (S) generated when the brake pads (16, 18) bear against the brake disc (10) on a carrier member (12) which is fixed to the vehicle, and further comprising at least one force sensor (64, R₁, R₂, R₃, R₄) disposed in the path of the force (S) between one of the brake pads (16, 18) and the carrier member (12) to measure the brake torque, **characterized** in that the force sensor (64, R₁, R₂, R₃, R₄) is arranged at or in a guide pin (34, 36) which is connected firmly to the carrier member (12) fast on the vehicle and engages in a slide groove (42, 44) formed in a component (52) which is firmly connected to the brake pad (16, 18) and adapted to slide with respect to the guide pin.

2. A disc brake, comprising two brake pads (16, 18) adapted to be pressed against both sides of a brake disc (10) and supported with respect to a force (S) generated when the brake pads (16, 18) bear against the brake disc (10) on a carrier member (12) which is fixed to the vehicle, and further comprising at least one force sensor (64, R₁, R₂, R₃, R₄) disposed in the path of the force (S) between one of the brake pads (16, 18) and the carrier member (12) to measure the brake torque, **characterized** in that the force sensor is arranged at or in a guide pin which is secured to one of the brake pads or a component firmly connected to the same and slidably engages in a slide groove formed in the carrier member fast on the vehicle or in a component firmly connected to the carrier member.

3. The disc brake as claimed in claim 1 or 2, characterized in that the disc brake is a floating caliper spot type disc brake, and that the guide pin (34, 36) is the only support of the brake pad in respect of the force (S, S').

4. The disc brake as claimed in any one of the preceding claims, characterized in that the guide pin (34, 36) has a rounded head (54) which enters into engagement with the walls of the groove (42, 44).

5. The disc brake as claimed in any one of the preceding claims, characterized in that strain gauges (R₁, R₂, R₃, R₄) are disposed on the guide pin to serve as force sensor.

6. The disc brake as claimed in claim 5, characterized in that strain gauges are disposed both in the direction of the axis (Z) of the guide pin (36) and perpendicular to the same.

7. The disc brake as claimed in any one of the preceding claims, characterized in that the guide pin comprises two parts (62, 54) which are adapted to be interconnected and between which a sensor sleeve (64) is clamped which has diametrically opposed flat surfaces (70, 72) on which strain gauges (R₁, R₂, R₃, R₄) are disposed.

## Revendications

1. Frein à disque comportant deux machoires de frein (16, 18), qui s'appliquent, des deux côtés, sur le disque de frein (10) et qui s'appuient, sur un support (12) fixé au véhicule, en fonction d'une force (S) exercée sur le disque de frein (10) par appui des machoîres de frein (16, 18), et comportant au moins un détecteur d'effort (64, R1, R2, R3, R4) disposé sur le trajet de la force (S) qui s'exerce entre l'une des machoîres de frein (16, 18) et la support (12), pour mesurer le couple de freinage, caractérisé en ce que le détecteur d'effort (64, R1, R2, R3, R4) est disposé sur, ou dans, une tige de guidage (34, 36) qui est reliée, de façon fixe, au support (12) solidaire du véhicule, et qui fait prise dans une rainure de glissement (42, 44), laquelle est formée dans une pièce constitutive (52) raccordée de façon fixe à la machoîre de frein (16, 18) et capable de coulisser par rapport à la tige de guidage.

2. Frein à disque comportant deux machoires de frein (16, 18), qui s'appliquent, des deux côtés, sur le disque de frein (10) et qui s'appuient, sur un support (12) fixé au véhicule, en fonction d'une force (S) exercée sur le disque de frein (10) par appui des machoîres de frein (16, 18), et comportant au moins un détecteur d'effort (64, R1, R2, R3, R4) disposé sur le trajet de la force (S) entre l'une des machoîres de frein (16, 18) et le support (12), pour mesurer le couple de freinage, caractérisé en ce que le détecteur d'effort est disposé sur, ou dans, une tige de guidage, qui est fixée sur l'une des machoîres de frein, ou sur une pièce constitutive raccordée de façon fixe à cette machoîre de frein, et qui peut faire prise, avec possibilité de coulisser, dans une rainure de glissement, qui est formée sur le support solidaire du véhicule ou sur une pièce constitutive reliée de façon fixe à ce support.

3. Frein à disque suivant l'une des revendications 1 ou 2, caractérisé en ce que le frein à disque est un frein à disque à étrier flottant et à plaquette couvrant un secteur partiel, et en ce que la tige de guidage (34, 36) est l'unique appui de la machoîre de frein par rapport à la force (S, S').

4. Frein à disque suivant l'une quelconque des revendications précédentes, caractérisé en ce que la tige de guidage (34, 36) présente une tête arrondie (54) qui vient en prise avec les parois de la rainure (42, 44).

5. Frein à disque suivant l'une quelconque des revendications précédentes, caractérisé en ce que, comme détecteur d'effort, des bandes de mesure de dilatation (R1, R2, R3, R4) sont disposées sur la tige de guidage.

6. Frein à disque suivant la revendication 5, caractérisé en ce que des bandes de mesure de dilatation sont disposées aussi bien dans la direction de l'axe (Z) de la tige de guidage (36), que perpendiculairement à celui-ci.

7. Frein à disque suivant l'une quelconque des revendications précédentes, caractérisé en ce que la tige de guidage présente deux parties reliées entre elles (62, 54), entre lesquelles est pincée une douille de détection (64) présentant, sur des cotés diamètralement opposés, des surfaces planes (70, 72), sur lesquelles sont disposées des bandes de mesure de dilatation (R1, R2, R3, R4).
